# EUROPEAN PATENT APPLICATION

(11) **EP 0 959 623 A1**
(43) Date of publication of application: **24.11.1999**
(21) Application number: 98810477.4
(22) Date of filing: 22.05.1998
(51) Int. Cl.: H04N 7/088

(54) **Method for the reception of teletext signals with a learning function and receiver using said method**

(71) Applicant: WHITELAY INTERNATIONAL LIMITED, Dublin 2 (IE)
(72) Inventor: Lanyon, Janes Reginald Georg, Sark (GB)
(74) Representative: Gaggini, Carlo, Ing.

(57) **Abstract**

Method for the reception of teletext signals, providing for the use of a receiver having a memory and a programmable control unit; the main characteristic of the method consists in the fact that it provides for the following steps:
a) memorizing, into a non-volatile memory, which, among the plurality of available teletext services, is the service presently used, in particular determining the program (i.e. the station) which is being watched, identified by the program memory location which has been activated for the reception thereof, and/or determining the identifier of the teletext service which is being used, contained in a determined line of the teletext signal;
b) memorizing into a non-volatile memory, for any one of the teletext services, each time that the user calls a teletext page and watches it, for a time interval greater than a predetermined interval, the relevant page number;
c) memorizing, into the memory indicated at the preceding point b), beside the page number, a number indicating the weight of the same page, i.e. how many times the page has been called during a predetermined number of accesses, made in the past, to the teletext service to which the page pertains.

## Description

The present invention refers to a method for the reception of teletext signals with the learning function and receiver using said method.

It is known what is a teletext signal receiver; normally it is a television signal receiver comprising a detector of teletext signals, i.e. digital signals Which are contained in a few lines during the vertical return of the television signal.

It is also known that the teletext signal reception is rather complicated because the information is contained in a number of pages (about one thousand) and several of said pages are in turn subdivided in a number of subpages (up to a few tens).

As the user cannot remember the number of all the pages, there are provided indexes, a general index and several group and subgroup indexes, of the pages. The user must therefore each time look beforehand for the indexes and thereafter call the pages which he or she is interested to.

The present invention has the aim of indicating how it is possible to help the user of a teletext signals receiver with the use thereof, so that the aforesaid disadvantages are avoided.

In order to reach the above indicated aim, subject of the present invention is a method for the reception of teletext signals and a receiver using said method, having the characteristics indicated by the text of the attached claims which are an integral part of the present description.

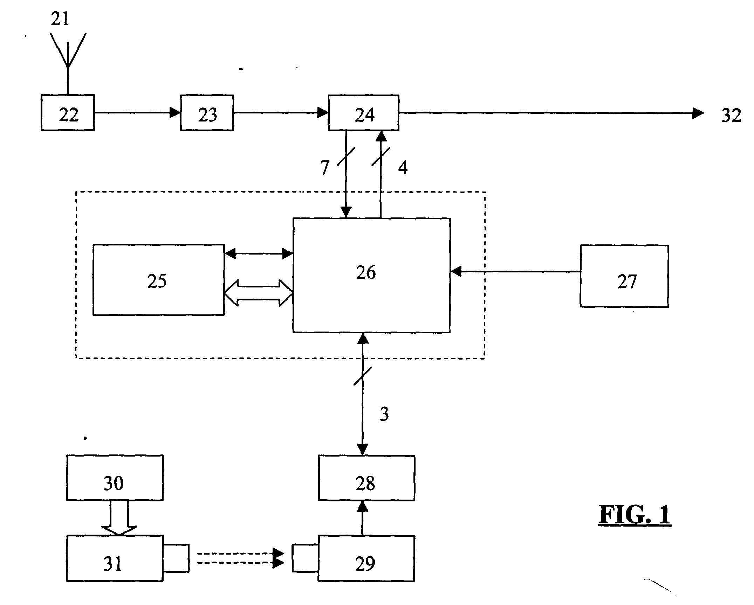

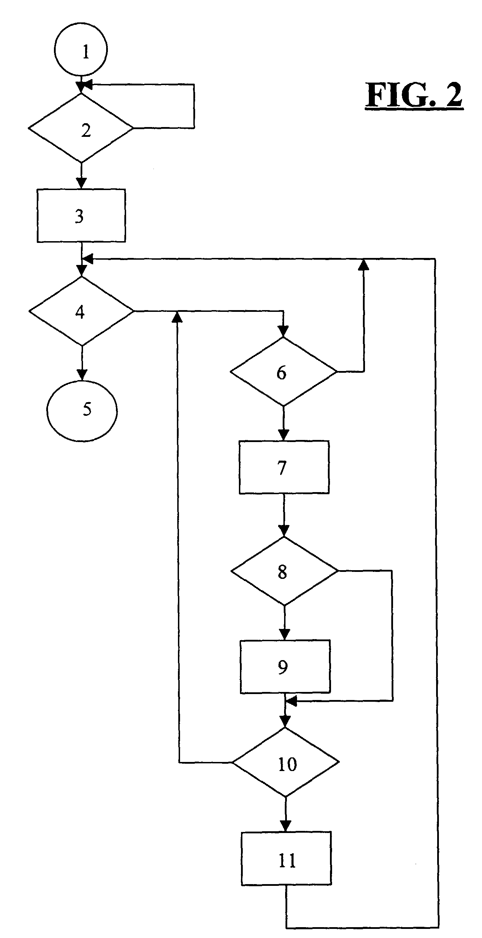

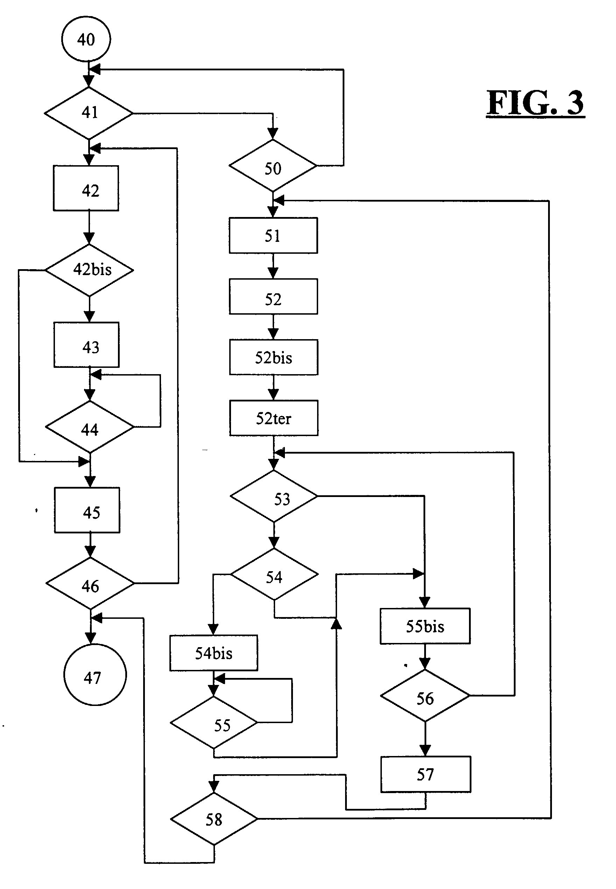

Further aims, characteristics and advantages of the present invention will be clear from the following detailed description and from the attached drawings, given only as an explicatory non-limiting example, wherein:
- attached figure 1 shows the block diagram of circuit device for receiving teletext signals;
- attached figure 2 shows schematically in a simplified manner the logic blocks of the learning function of a teletext signals receiver according to the present invention;
- attached figure 3 shows schematically in a simplified manner the logic blocks of the display functions of a teletext signals receiver according to the present invention.

In order to help the user, the present invention starts from the consideration that often the user consults, when he makes use of the teletext service, substantially always the same pages, i.e. those which contain the information in which he is interested.

For instance a determined user may normally consult beforehand the last news pages, then the pages of the preferred sport, then the weather pages and at last the television programs pages. In order to do so the user must consult several index pages and then a few pages of each of the said groups.

The invention suggests a method, according to which, the receiver learns the user preferences (depending also on the program or station which he is receiving) and can therefore, after some time, show automatically to the user, upon request, the sequence of pages which the user usually consults, so that he can save time and labour.

It is known that every television receiver comprises memory circuits and at least one control unit, represented by a suitable microprocessor, which, on the basis of an operating program, stored into its permanent memory (ROM), can manage the receiver's operation.

In figure 1 the reference number 1 indicates a receiving antenna, connected to a television receiver in order to pick up television signals transmissions, comprising teletext signals. Said antenna is connected to a known tuner, indicated with the reference number 22; to said tuner an intermediate frequency signal amplifier follows, also known and indicated with the number 23, comprising a video detector.

Amplifier 23 delivers at its output the composite video signal and it is connected to an amplifying and processing circuit of the video signal, indicated with the reference number 24; the processing circuit 24 may be for instance of the type VCU 2133 of the firm ITT, which performs also the analog to digital conversion and the digital to analog reconversion of the signal; at the output (reference number 32) of the circuit 24 there are available the three R, G, B (red, green, blue) signals for the picture display (for instance a color cathode ray tube, not shown in the figure).

Processing circuit 24 is connected, by means of two multiwire connections, to a teletext signals decoder, indicated with the reference number 26; said circuit 26 may be, for instance, of the type TPU 2732 of the firm ITT, or an equivalent circuit from any other manufacturer

### Decoding circuit 26 comprises:

- a data acquisition unit, which receives the digitalized input video signal, coming from circuit 24;
- a RAM memory used as a buffer for the teletext page to be displayed;
- a control unit for the external memory (for instance an 8 pages memory), indicated with the number 25;
- a character generator and a circuit for controlling the display;
- a timing unit, which receives the clock signal from the clock generator, indicated in the figure with the reference number 27, which may be for instance of the type MCU 2632 of the firm ITT;
- a bus interface circuit, for the bus connected to the central control unit 28. The teletext data acquisition begins during the vertical return period in the television line 7 and ends in the line 22; the teletext information is synchronized and identified; a comparator preselects the pages the numbers of which have been requested by the central unit 28 and load them into the memory 25; the internal memory is used as a buffer.

Display begins in line 48 and ends in line 286; the decoder selects for the display one of the 8 pages in memory; the 8 bits words (characters) are transformed into a 6x10 dots matrix by the character generator and are displayed onto the screen in 24 rows of 40 characters each. Circuit 26 receives the commands by the unit 28 by means of a suitable bus.

External 64 Kbit-memory 25 is organized in eight 8 Kbit-sections; every section stores a page and is organized in 25 rows of 40 bytes each, plus an additional 24 bytes row; rows 0-23 represent the 24 rows of the teletext page to be displayed; row 25 of each section is used for the section control information, while row 24 of sections 0 and 1 stores respectively the general control information and the rolling header.

Central control unit 28 may be for instance of the type CCU 2030 of the firm ITT, or any other control circuit comprising a related microprocessor and a suitable operating instructions program. Said central unit, beside to circuit 26, is also connected to a circuit, indicated with the number 29, which acts as an infrared signals receiver, coming from a remote control, indicated with the reference number 31; the latter is in turn connected to a command keyboard, indicated with the reference number 30.

Commands given by the user, by means of keyboard 30, arrive, through transmitter 31 and receiver 29, to the central control unit 28, which provides for decoding them and delivering suitable control signals to circuit 26.

It is also known that all the television signal receivers comprise at least one read-write memory (RAM) of the non-volatile type, i.e. a memory where the stored data do not get lost when the receiver is switched off or there is a power supply failure; such a memory normally is used to keep the tuning data of the preferred stations (programs) and can store the data of a few tens of stations.

According to the invention said memory can be provided with a greater capacity, or a second one of the same type can be provided, in order to memorize the user preferences as the teletext pages are concerned.

According to the invention, the control unit (e.g. unit 28 of fig. 1) can be programmed so that it, beside the normal functions provided for the teletext operation, can also implement a learning function of the user habits regarding the teletext pages and memorize said habits, divided also on the basis of the various selected teletext services; moreover the same unit can, on user request, automatically recall, in the correct sequence, the user preferred pages in the way the user usually looks for them.

In order to realize all that, the invention suggests that the receiver is programmed for performing the method which will be now described. The first step is the step of memorizing the teletext service which is being used. Normally it would be enough to memorize the program (i.e. the station) which is being watched to; said program can be normally identified on the basis of the memory location which has been activated in order to receive it (e.g. program 1); or even, if the station is transmitting it, by means of the station identifier, which is contained in the teletext signal line 32.

However there are some broadcasters which transmit more than one program (this is a typical situation of the government broadcasters) but the teletext service is only one. The user could then in alternative use one or more programs transmitted by the same broadcaster for looking at the same teletext service. In this case, if it is desired to better follow the user habits, it is necessary that the preferred pages, selected within the same teletext service, even if transmitted by different stations, are grouped into only one data-base.

In order to do so, instead of associating to the individual programs the different data-bases, build up on the basis of the user preferences, it is necessary to associate the different data-bases to the single teletext services. In order to obtain this aim, instead of memorizing the program, into the memory provided, it is memorized the teletext service which is being used. This is possible because in the first row of the teletext service, in a predetermined place, there is the name of the teletext service which is being watched to.

The second step is that of building up a small data-base (for every one of the programs, or for every one of the teletext services) of the user preferred pages; to this purpose it will be enough, for instance, that the control unit provides for memorizing, every time that the user calls a teletext page and watches to it for more than 10 seconds, the relevant page number and beside the page number also a number, indicating the weight, i.e. the times that the page has been called, for instance during the last 100 times that the relevant teletext service has been accessed; then such a weight number is 1 the first time that the page is called, 2 the second time, and so on.

The third step is that of building up (always for every program or every teletext service) the page consulting sequence of the most frequently called pages (for instance the pages which have reached a weight number of 5 or more), and memorizing such a sequence.

That being stated, the receiver is now ready for executing the preferred pages function; pressing a suitable key, or using a specially defined command, the receiver will provide for displaying the first page of the memorized sequence (excluding, if this is the case, the general index page and also the other group index pages) corresponding to the teletext service which is being consulted; after that, pressing again the same key, or pressing the customary + or - keys, it would be possible to display, one after the other, the pages of the memorized sequence, corresponding to the most user called pages.

It's clear that if, by chance, when this feature of automatically displaying the user's preferred pages is used, one of those memorized into the list would not be transmitted at the moment, pressing the + or - keys will provide for selecting and displaying of the real next or previous page among those memorized. This function may be easily obtained in the case the receiver is making use of TOP-TEXT signals.

Moreover a second more sophisticated automatic display mode can be provided which will be now described; starting from the first page of the memorized sequence (always relating to the teletext service which is being used) 5 pages of the said sequence are examined backwardly and 10 pages forwardly; the pages are put in number order and are displayed (of course if a page is not transmitted in that moment, the next one is displayed); the displayed pages are moreover stored into a temporary memory; then the second page of the memorized sequence is taken and the described operation is repeated, discarding the pages which have already been displayed during the preceding step. Of course this second automatic display mode can be activated by the user pressing a second suitable key or performing a second special command.

This second operation mode is useful for browsing through the teletext service, watching to the more frequently chosen pages, but grouping them by topics. For instance, if the more frequently called page is a sport page and the one which follows next in preference order is a political news page, and the second which follows is again a sport page, in this operation mode, firstly all the sport pages are called, which are comprised in the memorized sequence, (because they have close numbers), and then all those with political news, and so on.

The described functions are now explained referring to fig. 2 and 3. In the fig. 2 there are schematically shown the significant logic blocks of the learning function of a teletext signal receiver according to the invention. Said logic blocks correspond to a selected part of the operating instructions which are stored in the microprocessor memory controlling the operation of the teletext signal decoder comprised in the receiver.

The block indicated with the number 1 represents the starting block of the logic flow relating to the learning function of the user habits.

The control can arrive to block 1 in several ways; for instance it can be provided that it so happen every time that a television program has been selected and in such a program the teletext signal presence has been detected.

The control is passed by block 1 to next block 2.

The block 2 is a test block; it verifies whether the user has called the teletext service; in the affirmative case the control passes to next block 3; in the negative case the control returns to block 2; in all the test blocks the bottom output corresponds to the YES output; the side output corresponds to the NO output.

Block 3 provides for memorizing the selected television program number or for identifying and memorizing the name of the used teletext service; the control passes then to next block 4.

Block 4 is a test block too; it verifies whether the teletext operation has been disactivated; in the affirmative case the control passes to next block 5; in the negative case the control passes to block 6.

Block 5 is the end function block; the control is returned to the general operating program of the receiver.

Block 6 is another test block; it verifies whether the called teletext page remains on the screen for at least 10 seconds; in the affirmative case the control passes to next block 7; in the negative case the control returns to block 4.

Block 7 provides for memorizing the displayed teletext page number; moreover it provides for reading in memory the weight of the page, incrementing it by one and memorizing it again; the control then passes to next block 8.

Block 8 is a test block; it verifies whether the read weight is greater than 4; in the affirmative case the control passes to next block 9; in the negative case the control passes to block 10.

Block 9 provides for memorizing the displayed page number into a separated part of the memory in the appropriate place of a preferred pages list; the preferred pages list is organized according to a logic organizing the preferred pages in a decreasing hierarchical preference order; it is clear that if a page, not present in the preferred pages list (which has a limited size), comes in the list, because it has been recently very often accessed, a page is eliminated from the list that has an equal or less weight. The control is then passes to block 10.

Block 10 is a test block; it verifies whether a new teletext page has been called; in the affirmative case the control passes to next block 11; in the negative case the control returns to block 6.

Block 11 in turn passes the control to block 4.

The learning function is now clear from the description of the circuit of fig. 2. If a certain teletext page is displayed for at least 10 seconds, the number thereof is memorized. When a certain page reaches at least the frequency of 4 calls, the corresponding page number is inserted into the preferred pages list together with its "weight" i.e. the number of times that said page has been selected during a certain period of use of that teletext service.

In fig. 3 there are schematically shown the significant logic blocks of the automatic display function in a teletext signal receiver according to the invention.

The block indicated with the number 40 represents the starting block of the logic flow relating to the automatic display functions.

The control can arrive to block 40 in several ways; it can be provided, e.g., that this happen every time that the user activates the teletext operation. The control is then passed by block 40 to next block 41.

Block 41 is a test block; it verifies whether a first special command has been issued (i.e. the command coming from keyboard 30 indicating that the user has requested the automatic display of the preferred pages); in the affirmative case the control passes to next block 42; in the contrary case it passes to block 50.

Block 42 provides for reading in the memory in the preferred pages list, the page number indicated by a suitable page pointer of the pages contained in the list; at the beginning of the consultation the said pointer points to the first page number of the list, i.e. of the page that has been the most frequently called page during the past teletext service use. The control passes then to next block 42 bis.

Block 42 bis is a test block; it verifies whether the pointed page is on the cycle, i.e. if it is transmitted at the moment; in the affirmative case the control passes to next block 43; in the negative case it passes to block 45.

Block 43 provides for displaying the corresponding teletext page; the control passes to next block 44.

Block 44 is a test block; it verifies whether a second special command has been issued (i.e. the command of proceeding to the automatic scanning of the preferred pages, for instance by pressing twice the + key); in the affirmative case the control passes to next block 45; in the negative case it returns to block 44.

Block 45 increments the pointer of the preferred pages list; the control passes then to next block 46.

Block 46 is a test block; it verifies whether the end of the list has been reached; in the affirmative case the control passes to next block 47; in the negative case it returns to block 42.

Block 47 is the end block of the preferred pages display function; the control returns to the general operating program of the receiver.

Block 50 is a test block; it verifies whether a third special command has been issued (i.e. the command of performing the scanning of the preferred pages, grouping them in groups of pages having adjacent numbers); in the affirmative case the control passes to next block 51; in the negative case it returns to block 41.

Block 51 provides for reading in the memory in the preferred pages list, the page number indicated by a suitable page pointer of the pages contained in the list; at the beginning of the consultation the said pointer points to the first page number of the list, i.e. of the page that has been the most frequently called page during the past teletext service use. The control passes then to next block 52.

Block 52 provides for searching the 5 pages having a page number which is less than the pointed (by block 51) page number, but selecting only the pages which are comprised in the preferred pages list, and then the 10 pages having a page number which is greater than the pointed (by block 51) page number, also in this case selecting only pages which are comprised in the preferred pages list. The control passes to nest block 52 bis.

Block 52 bis provides for building up a temporary table of the pages which have been identified by block 52; the control passes to next block 52 ter. Block 52 ter provides for pointing to the first page of the table built up by block 52 bis; the control passes to next block 53.

Block 53 is a test block; it verifies whether the pointed page is on the cycle, i.e. if it is transmitted at the moment; in the affirmative case the control passes to next block 54; in the negative case it passes to block 55 bis.

Block 54 is a test block; it verifies whether the pointed page has already been displayed; in the affirmative case the control passes to block 55 bis; in the negative case it passes to block 54 bis.

Block 54 bis provides for displaying the page and for memorizing into a temporary memory that it has been displayed; the control passes to nest block 55.

Block 55 is a test block; it verifies whether a special command has been issued (i.e. the command of proceeding to the automatic scanning of the pages to be displayed, for instance by pressing twice the + key); in the affirmative case the control passes to next block 55 bis; in the negative case it returns to block 55.

Block 55 bis provides for incrementing the page pointer in the table built up by block 52; the control then passes to block 56.

Block 56 is a test block; it verifies whether the scanning of the pages in the temporary table built up by block 52 bis is terminated; in the affirmative case the control passes to next block 57; in the negative case it returns to block 52.

Block 57 provides for incrementing the pointer in the preferred pages list; the control passes then to block 58.

Block 58 is a test block; it verifies whether the end of the preferred pages list has been reached; in the affirmative case the control passes to block 47; in the negative case it returns to block 51.

It is clear how in this second scanning mode of the preferred pages it is possible to read the preferred teletext pages (automatically put into a list build up by the receiver) in the way to obtain a scanning sequence which beforehand scans all the preferred pages regarding a certain topic and then all the preferred pages regarding another topic and so on.

Characteristics of the described method and of the corresponding teletext signal receiver are clear from the description made and from the annexed drawings.

Also clear are from the given description the advantages of the method and of the receiver according to the present invention.

In particular they consist in the fact that it is permitted to the user of automatically obtaining a display of the preferred teletext pages, or of obtaining a display of the preferred pages grouped by topics, allowing him to browse a certain number of pages concerning a preferred topic, starting from the beginning of the set of pages to which the preferred page pertains.

The method and the receiver according to the invention realize this advantage for the user without any significant cost increase and without creating any collateral disadvantage.

Of course there are possible several modifications to the method and the receiver which have been described, without leaving the scope of protection of the invention.

Among the many possible variants, we cite for instance that of browsing, once a preferred page has been identified, not only the preferred pages pertaining to the same group of topics, but also the pages which are adjacent to the selected preferred page, even if these adjacent pages are not comprised in the preferred pages list.

In order to obtain this aim, it is enough to modify the operating mode of the block 52 in fig. 3 so that it selects the 5 pages having a number which is less than the selected preferred page and the 10 pages having a number which is greater, independently from the fact that these pages are comprised or not in the list of the preferred pages.

Another variant among those that are possible, can consist in the fact that the grouping of the preferred pages is made, instead of selecting a certain number of pages preceding and following the preferred page, through an identifier of the relevant topics, which is for instance transmitted with the teletext signal according to the TOP TEXT system.

## Claims

1. Method for the reception of teletext signals, providing for the use of a receiver having a memory and a programmable control unit, characterized by the following steps:
a) memorizing, into a non-volatile memory, which, among the plurality of available teletext services, is the service presently used, in particular determining the program (i.e. the station) which is being watched, identified by the program memory location which has been activated for the reception thereof, and/or determining the identifier of the teletext service which is being used, contained in a determined line of the teletext signal;
b) memorizing into a non-volatile memory, for any one of the teletext services, each time that the user calls a teletext page and watches to it, for a time interval greater than a predetermined interval, the relevant page number;
c) memorizing, into the memory indicated at the preceding point b), beside the page number, a number indicating the weight of the same page, i.e. how many times the page has been called during a predetermined number of accesses, made in the past, to the teletext service to which the page pertains.

2. Method for the reception of teletext signals, according to claim 1, further characterized by the step of memorizing into a non-volatile memory, for each of the teletext services, and/or of the programs, the sequence with which the pages having reached at least a predetermined weight have been consulted.

3. Method for the reception of teletext signals: according to claim 2, characterized in that, issuing a first special predefined command, the receiver shall provide for:
- displaying the first page of the memorized sequence according to claim 2, relating to the teletext service and/or to the program which is being watched to; and that, issuing a second special predefined command, equal to or different from the first, the receiver shall provide for:
- displaying one after the other the pages of the said memorized sequence which are the most frequently called by the user pertaining to said teletext service and/or program.

4. Method for the reception of teletext signals, according to claim 2, characterized in that, issuing a third special predefined command, the receiver shall provide for displaying the pages of the said memorized sequence relating to the pages usually more frequently called, grouping them by topic, by means of a mathematical algorhitm or deriving the topic information of the pages directly from the teletext signal.

5. Method for the reception of teletext signals, according to claim 2, characterized in that, issuing a third special predefined command, the receiver shall provide for:
- a) searching, starting from the first page of the said memorized sequence, relating to the teletext service and/or to the program which is being watched to, a predefined number of pages backwardly and another predefined number of pages forwardly in the said sequence;
- b) ordering said searched pages by number in a table;
- c) displaying them, starting from the page having the smallest number and leaving out the pages not transmitted at the moment and the already displayed pages;
- d) storing the displayed pages into a temporary memory;
- e) passing to the next page of the table;
- f) repeating the steps c), d), e), up to the end of the table;
- g) passing to the next page of said sequence;
- h) repeating the steps a), b), c), d), e), f) and g) up to the end of said sequence.

6. Teletext signal receiver for implementing the method according to claim 1, comprising a memory and a programmable control unit, characterized by the fact that in said receiver there are provided circuit means for:
memorizing into a non-volatile memory, which teletext service is being watched to, among a plurality of receivable teletext services, in particular determining the program (i.e. the station) which is being watched to, identified by means of the program memory location which has been activated for receiving it and/or determining the identifier of the teletext service which is being used, contained in a determined line of the teletext signal;
- memorizing into a non-volatile memory, for every of the teletext services, each time that the user calls a teletext page and watches to it for a time period longer than a predetermined interval, the relevant page number;
- memorizing into the memory of the preceding step, beside the page number, a number, indicating the weight of the said page, i.e. the number of times that the page has been called during a predetermined number of accesses, made in the past, to the teletext service to which the page pertains.

7. Teletext signal receiver according to claim 6, characterized by the fact that it provides means for memorizing, into a non-volatile memory, the sequence with which the pages having reached at least a predetermined weight have been consulted.

8. Teletext signal receiver according to claim 7, characterized by the fact that it provides means which, issuing a first special predetermined command, provide for:
- displaying the first page of the memorized sequence according to claim 7, relating to the teletext service and/or to the program which is being watched to; and that issuing a second special predetermined command, equal or different from the first one, provide for:
- displaying one after the other the pages of said memorized sequence, which contains the usually most called pages relating to said teletext service and/or program.

9. Teletext signal receiver according to claim 7, characterized by the fact that, issuing a third special predetermined command, it provides for displaying the pages of said memorized sequence, which contains the usually most called pages, grouping them by topics, by means of a mathematical algorithm or deriving the information on the topic of the pages directly from the teletext signal.

10. Teletext signal receiver according to claim 9, characterized by the fact that it provides means which, issuing a third special predetermined command, provide for:
- a) searching, starting from the first page of the said memorized sequence, relating to the program which is being watched to, a predefined number of pages backwardly and another predefined number of pages forwardly in the said sequence;
- b) ordering said searched pages by number in a table;
- c) displaying them, starting from the page having the smallest number and leaving out the pages not transmitted at the moment and the already displayed pages;
- d) storing the displayed pages into a temporary memory;
- e) passing to the next page of the table;
- f) repeating the steps c), d), e), up to the end of the table;
- g) passing to the next page of said sequence;
- h) repeating the steps a), b), c), d), e), f) and g) up to the end of said sequence.

11. Method for the reception of teletext signals and/or receiver of teletext signals using the method according to claims 2 or 7, characterized in that said memorized sequence, containing the consulted pages which have reached a predetermined weight, is organized in a hierarchical way, associating an outstanding place to the most consulted pages, i.e. the pages having a greater weight.

12. Method for the reception of teletext signals and/or receiver of teletext signals using the method according to claims 2 or 7, characterized in that issuing a third special predetermined command, the receiver will provide for displaying the most usually called pages grouping them by topics by means of a mathematical algorithm or deriving the information on the topic of the pages directly from the teletext signal, and showing also some of the pages numerically adjacent to those pertaining to said sequence, even if not present in said sequence.

13. Method for the reception of teletext signals and/or receiver of teletext signals using said method, as resulting from the teachings contained in the present description and in the annexed drawings.
